# EUROPÄISCHE PATENTANMELDUNG

(11) **EP 1 978 700 A1**
(43) Veröffentlichungstag der Anmeldung: **08.10.2008**
(21) Anmeldenummer: 07105743.4
(22) Anmeldetag: 05.04.2007
(51) Int. Cl.: H04L 29/06, G06Q 30/00

(54) **Verfahren und System zur Bereitstellung einer Datenauswahl über einen Übereinstimmungsgrad zwischen Programm- und Dienstangeboten und Benutzerinteressen**

(71) Anmelder: Siemens Aktiengesellschaft Österreich, 1210 Wien (AT)
(72) Erfinder: Kindermann, Robert, 1210 Wien (AT); Kraus, Gerhard, 1100 Wien (AT); Merlingen, Werner, 1140 Wien (AT)

(57) **Zusammenfassung**

Die Erfindung betrifft ein Verfahren zur Bereitstellung einer Datenauswahl über einen Grad einer Übereinstimmung zwischen Programm- und Dienstangeboten verschiedener Anbieter mit Interessenspräferenzen von Benutzern. Dieses Verfahren umfasst die Schritte:
a) Eingeben von Benutzerdaten, vorzugsweise aktuelle Interessenspräferenzen und aktueller Präsensstatus, durch einen Benutzer und Erfassen dieser Benutzerdaten als semantische Datenstruktur,
b) Eingeben von Anbieterdaten, insbesondere Anbieterprofile sowie Programm- und Dienstangeboten, durch Programm- und Dienstanbieter und Erfassen dieser Anbieterdaten in semantisch interpretierbarer Form,
c) Verknüpfen der vorliegenden Benutzerdaten mit den vorliegenden Anbieterdaten mittels semantischer Methoden nach entsprechenden Auswahlkriterien, und
d) Ermitteln der Übereinstimmung zwischen vorliegenden Benutzerdaten mit den vorliegenden Anbieterdaten.

Weiters betrifft die Erfindung ein System (SYS), welches für eine Durchführung des Verfahrens geeignete Einrichtungen bzw. Vorrichtungen umfasst.

## Beschreibung

### Technisches Gebiet

Die Erfindung betrifft ein Verfahren zur Bereitstellung einer Datenauswahl über einen Grad einer Übereinstimmung zwischen Programm- und Dienstangeboten verschiedener Anbieter mit Interessenspräferenzen von Benutzern sowie ein System zur Durchführung dieses Verfahrens.

### Stand der Technik

In den letzten Jahren und Monaten sind die Angebote an so genannten Content wie z.B. Fernseh- und Videoprogrammen wie - inhalten, welche von professionellen Programmanbietern - im Folgenden Anbieter genannt - zur Verfügung gestellt werden, stark angewachsen. So können beispielsweise bereits heute über das ASTRA-Satellitensystem mehr als 1000 Fernseh- und Radioprogramme empfangen werden. Zusätzlich werden mittels Internetangebote wie z.B. YouTube Inhalte - so genannten "User provided content" - für Fernseh- bzw. Videokonsumenten angeboten.

Aktuelle und künftige digitale Übertragungstechniken, insbesondere für das Fernsehen, wie beispielsweise Digital Video Broadcast (DVB) in verschiedenen Varianten, ermöglichen es, eine immer weiter steigende Zahl von Fernsehprogrammen und auch Diensten (z.B. interaktive Spiele, Video-on-Demand, inaktive Dienstleistungen, etc.) für Fernseh- und Videokonsumenten - im Folgenden Benutzer genannt - zur Verfügung zu stellen.

Die bedeutendsten Eigenschaften des digitalen Fernsehens werden darin gesehen, dass digitale Signale nahezu ohne Informationsverlust übertragen und komprimiert werden können. Da die meisten herkömmlichen Wiedergabevorrichtungen (z.B. TV-Geräte, etc.) nicht direkt das digitalen Signal verarbeiten können, wird zum Empfang des digitalen Fernsehens eine entsprechende digitales Multimedia-Wiedergabevorrichtung wie z.B. ein zusätzlicher Digital-Decoder - eine so genannte Set-Top-Box - oder ein geeignetes Fernsehgerät benötigt, in welches der Decoder genauso wie das heute übliche analoge Empfangsteil für analoges Fernsehen bereits integriert ist.

Der DVB-Standard als eine mögliche digitale Übertragungsart definiert einen so genannten Rückkanal, mit welchem beispielsweise eine Kommunikationsverbindung von der entsprechenden Multimedia-Wiedergabevorrichtung (z.B. Set-Top-Box, DVB-fähiges TV-Gerät, etc.) zum Internet hergestellt werden kann. Dadurch wird Interaktivität der zusätzlich zu Programminhalten angebotenen Dienste für Benutzer wie Anbieter ermöglicht.

Durch die Möglichkeit immer mehr Programminhalte, aber auch Dienstangebote den Benutzern zur Verfügung zu stellen, haben einerseits die Anbieter Interesse daran, die jeweils aktuellen Bedürfnisse und Interessenspräferenzen der Benutzer zu kennen, um Programm- und Dienstangebote entsprechend den Bedürfnissen ihrer Benutzer gestalten zu können. Derzeit werden die Interessenspräferenzen der Benutzer z.B. hauptsächlich mittels statistischer Befragungen und/oder durch die sogenannte Telemetrie erfasst. Bei der Telemetrie werden in repräsentativ für die Bevölkerung ausgesuchten Privathaushalten beim Fernsehen Daten elektronisch gemessen. Dabei können allerdings meist nur Zuseherzahlen oder die so genannte Reichweite einer Sendung oder eines Programminhaltes bzw. das Nutzungsverhalten festgestellt werden. Ein aktuelles Interesse oder bestimmte, aktuelle Präferenzen der Benutzer für bestimmte Programm- oder Dienstangebote können dabei allerdings nur sehr unzureichend ermittelt werden.

Andererseits kann eine solche Vielfalt an Programmen und Diensten den Benutzern nicht mehr über beispielsweise gedruckte Programmzeitschriften vermittelt werden - insbesondere da sich manche Inhalte (z.B. der so genannte "User provided content") kurzfristig ändern können oder nur für eine bestimmten Zeit (z.B. Video-on-Demand) verfügbar sind. Die Benutzer können daher meist nur auf sehr umständliche Weise, aus den ihnen zugänglichen Programm- und Dienstangeboten die für sie interessanten Programme, Programminhalte und/oder Dienst auszuwählen. Diese Auswahl geschieht beispielsweise durch Lesen von Programmzeitschriften oder Internetseiten.

Bei Programmen, welche mittels digitaler Übertragungstechnik ausgestrahlt werden, werden zusammen mit dem Programminhalt zusätzliche Informationen für eine so genannte elektronische Programmzeitschrift ("Electronic Program Guide", EPG) übertragen. Eine solche elektronische Programmzeitschrift kann typischerweise dutzende bis hunderte Programmangebote verschiedener Anbieter enthalten. Diese Programmangebote werden üblicherweise in tabellarischer Form auf einer Anzeigevorrichtung, welche über die Wiedergabe-vorrichtung angesteuert wird, ausgegeben. Für das Angebot an zur Verfügung stehenden Diensten gibt es zurzeit nur für DVB-H ("Digital Video Broadcasting Handheld"), welches für eine asynchrone Übertragung auf mobile Endgeräte (Handhelds) verwendet wird, erste Ansätze eines so genannten "Electronic Service Guide (ESG)".

Will nun ein Benutzer ein für ihn gerade interessantes Programm- und/oder Dienstangebot heraussuchen - sei es mittels Programmzeitschrift, Internetseite oder elektronischer Programmzeitschrift (EPG), so muss er alle Programm- und Dienstangebote durchsehen, was sehr aufwendig und unkomfortabel ist.

### Darstellung der Erfindung

Der Erfindung liegt daher die Aufgabe zugrunde, ein Verfahren sowie ein System der eingangs angeführten Art derart weiterzuentwickeln, dass es sowohl für Anbieter als auch für Benutzer einfach handhabbar ist, und dass auf einfache und nutzerfreundliche Weise eine Datenauswahl über einen Übereinstimmungsgrad zwischen anbieterseitigen Programm- und Dienstangeboten und aktuellen, benutzerseitigen Interessenspräferenzen bereitgestellt wird.

Diese Aufgabe wird gelöst durch ein Verfahren zur Bereitstellung einer Datenauswahl über einen Grad einer Übereinstimmung zwischen Programm- und Dienstangeboten verschiedener Anbieter mit Interessenspräferenzen von Benutzern, wobei dieses Verfahren die folgenden Schritte umfasst:
a) Eingeben von Benutzerdaten, vorzugsweise aktuelle Interessenspräferenzen und aktueller Präsenzstatus, durch einen Benutzer und Erfassen dieser Benutzerdaten als semantische Datenstruktur,
b) Eingeben von Anbieterdaten, insbesondere Anbieterprofile sowie Programm- und Dienstangeboten, durch Programm- und Dienstanbieter und Erfassen dieser Anbieterdaten in semantisch interpretierbarer Form,
c) Verknüpfen der vorliegenden Benutzerdaten mit den vorliegenden Anbieterdaten mittels semantischer Methoden nach entsprechenden Auswahlkriterien, und
d) Ermitteln der Übereinstimmung zwischen vorliegenden Benutzerdaten mit den vorliegenden Anbieterdaten.

Der Hauptaspekt des erfindungsgemäßen Verfahrens besteht darin, dass sowohl die Benutzer- als auch die Anbieterdaten als semantische Datenstrukturen bzw. in semantisch interpretierbarer Form erfasst und dann mittels semantischer Methoden entsprechend verknüpft werden, um eine Übereinstimmung zwischen vorliegenden Benutzerdaten mit den Anbieterdaten zu ermitteln. Dadurch wird sowohl für die Anbieter als auch für die Benutzer eine einfache Handhabung erreicht. Außerdem wird damit ermöglicht, dass aus einer unübersichtlichen Informationsdatenmenge (z.B. Benutzer-, Anbieterdaten), welche typischerweise aus unterschiedlichen Quellen (d.h. Eingabe durch verschiedene Benutzer und/oder Anbieter) stammen, die physikalisch getrennt voneinander liegen können, mittels semantischer Methoden auf einfache und rasche Weise zielgerichtet Übereinstimmungen zwischen vorliegenden Benutzerdaten mit den vorliegenden Anbieterdaten zu ermitteln.

Der Begriff "Semantik" bezeichnet die Lehre für Sinnhaftigkeit oder die Bedeutung von sprachlichen Konstruktionen wie z.B. von Wörtern oder Sätzen. Insbesondere in der Informationstechnologie wird unter "Semantik" bzw. "semantisch" die Bedeutung einer Informationsfolge wie z.B. der Benutzer- oder der Anbieterdaten verstanden. Dabei werden die Informationen zusätzlich zu der für den Menschen (Benutzer, Anbieter) lesbaren Form auch in einer für Maschinen verarbeitbaren Form repräsentiert, wodurch diese leichter mit technischen Mitteln (z.B. Servern, Computerprogrammen, etc.) auffindbar, teilbar und analysierbar sind.

Als Benutzerdaten werden beim erfindungsgemäßen Verfahren vorzugsweise aktuelle Interessenspräferenzen und aktueller Präsenzstatus (z.B. "Answesend", "Anwesend bei bestimmten Anbieter", etc.) angegeben, wobei die aktuellen Interessenspräferenzen beispielsweise Angaben wie Musik mit detaillierter Beschreibung (z.B. bestimmte Genres, Interpreten, etc.), Sport (z.B. Leichtathletik, Fußball, Reiten, Skispringen, etc.), Theater, Nachrichten und Politik, Naturwissenschaften, interaktive Spiele, interaktive Dienstleistungen, etc. umfassen können.

Diese Benutzerdaten können für eine Auswertung einerseits auf einfache und nutzerfreundliche Weise vom Benutzer explizit, aber auch implizit eingegeben werden. Beispielsweise kann der Benutzer sein Interesse explizit in eigenen Worten oder nach vorgegebenen Kategorien (Stichwörtern) oder beispielsweise durch Knopfdruck z.B. über eine Wiedergabevorrichtung eintragen. Eine implizite Eingabe liegt z.B. dann vor, wenn ein aktueller Präsenzstatus durch einen Programmwechsel des Benutzers geändert wird. Der Benutzer erhält dann in übersichtlicher Weise jene Programme und/oder Dienste angeboten, welche seinem aktuell angegebenen Interesse entsprechen, wobei unter Anwendung von semantischen Methoden (d.h. von diesen Methoden zur Verknüpfung wird auf den maschineninterpretierbaren Teil der Benutzerdaten zugegriffen) mittels entsprechenden Auswahlkriterien, welche durch die Benutzerdaten bestimmt werden, die Anbieterdaten entsprechend analysiert werden.

Andererseits werden von den Anbietern die Anbieterdaten, welche Anbieterprofile sowie Programm- und/oder Dienstangebote (z.B. Beschreibung des Programms, Dienstname, Zeit der Verfügbarkeit, Genre, Preis, programm-/dienstspezifische Eigenschaften, etc.) auf einfache Weise - z.B. in "Klartext" eingegeben und zusätzlich in semantischer (d.h. in maschinell schlussfolgernder und auswertbarer) Form erfasst. Einem Anbieter kann dann auf einfache Weise durch Verknüpfung mittels semantischer Methoden und entsprechend jeweiliger von Anbieter vorgegebener Auswahlkriterien (z.B. Benutzerdaten mit oder ohne Abgleich mit allen oder bestimmten Anbieterdaten, etc.) eine Übereinstimmung zwischen vorliegenden Benutzerdaten mit den Anbieterdaten zur Verfügung gestellt werden.

Dadurch kann ein Anbieter von Programm- und Dienstangeboten rasch ein aktuelles Interesse von Benutzern erkennen und auch auf dieses entsprechend reagieren - beispielsweise durch ein entsprechendes Angebot oder durch Anpassung der Programm- und Dienstangebote. Vom Benutzer können Interessen explizit und auf einfache Weise bekanntgegeben und auch auf einfache Weise entsprechende Programm- und Dienstangebote gefunden werden.

Es ist günstig, wenn vom Benutzer für ein Eingeben der Benutzerdaten eine digitale Multimedia-Wiedergabevorrichtung, wie beispielsweise eine Set-Top-Box oder ein DVB-fähiges TV-Gerät oder ein Personal Computer, eingesetzt wird, Dadurch kann vom Benutzer eine bereits vorhandene Infrastruktur (z.B. Set-Top-Box, Personal Computer, entsprechendes TV-Gerät, etc.) ohne Zusatzaufwand genutzt werden.

Es empfiehlt sich auch, dass die Multimedia-Wiedergabe-vorrichtung Kommunikationsverbindungen zu aufbereiteten Informationsangeboten der Programm- und Dienstanbieter, welche die Anbieterdaten umfassen, aufweist, damit auf einfache Weise ein Abgleich mit den Anbieterdaten ermöglicht wird. Diese Informationsangebote können z.B. dezentral auf Infrastruktur oder Internetseiten der Anbieter organisiert sein.

Bei einer weiteren, alternativen Ausgestaltung des erfindungsgemäßen Verfahrens wird für das Verknüpfen der vorliegenden Benutzerdaten mit den vorliegenden Anbieterdaten mittels semantischer Methoden nach entsprechenden Auswahlkriterien eine zentrale Plattform eingesetzt. Dabei kann es günstig sein, wenn die digitale Multimedia-Wiedergabevorrichtung eine Kommunikationsverbindung zur zentralen Plattform aufweist, auf welcher die eingegebenen Benutzerdaten abgelegt werden. Über die Kommunikationsverbindung werden auf einfache Weise die Benutzerdaten auf der zentralen Plattform eingetragen und vorzugsweise unter Berücksichtigung von Datenschutzregeln anonymisiert bzw. persönliche Daten der Benutzer neutralisiert. Danach werden die Benutzerdaten in eine semantische (maschinell schlussfolgernde und auswertbare) Darstellung gebracht. Die Anbieterdaten werden ebenfalls auf einfache Weise dieser zentralen Plattform zur Verfügung gestellt. Von der zentralen Plattform wird dann die Verknüpfung der Benutzer- und Anbieterdaten mittels semantischer Methoden durchgeführt und die Übereinstimmung dieser Daten ermittelt. Die zentrale Plattform fungiert dabei als "Informationsvermittler" bzw. als so genannter "Informationsbroker" und liefert zielgerichtet aus einer unübersichtlichen Menge an Benutzer- und Anbieterdaten eine Datenauswahl über einen Übereinstimmungsgrad zwischen diesen.

Es ist vorteilhaft, wenn als Kommunikationsverbindung das Internet eingesetzt wird. Insbesondere bei Einsatz des DVB-Standards ist ein so genannter Rückkanal möglich, über welchem auf einfache Weise eine technische Verbindung von DVB-Empfangsgeräten (z.B. Set-Top-Box, DVB-fähiges Fernsehgerät, etc.) in das Internet eingerichtet werden kann. Bei Verwendung eines Personal Computers als digitale Multimedia-Wiedergabevorrichtung kann beispielsweise ein bereits vorhandener Zugang zum Internet ohne zusätzlichen Aufwand verwendet werden.

Vorzugsweise können die Benutzerdaten unter Berücksichtigung der Anbieterdaten und/oder von anbieterspezifischen Anforderungen als Auswahlkriterien semantisch ausgewertet, und dann ein Auswertungsergebnis dem entsprechenden Programm- und Dienstanbieter mitgeteilt werden.

Ein Anbieter kann so auf einfache Weise beispielsweise in regelmäßigen Abständen oder durch explizites Anfordern die Benutzerdaten mit den Anbieterdaten semantisch verknüpfen und auswerten. Ergebnisse dieser Auswertungen können dem Anbieter in geeigneter Form - beispielsweise als graphische oder tabellarische Darstellung - angezeigt werden.

Als entsprechende Auswahlkriterien sind anbieterseitig beispielsweise denkbar, ein Summendarstellung sämtlicher Benutzerdaten ohne Abgleich mit den Anbieterdaten ("Total View"), eine Darstellung sämtlicher Benutzerdaten mit Abgleich mit den Anbieterdaten ("Global View"), eine Darstellung sämtlicher Benutzerdaten mit Abgleich mit den Anbieterdaten, wobei die Benutzer gerade ein Angebot des abfragenden Anbieters nutzen ("Own Customer View"), Darstellung von Veränderungen der aktiven Benutzer über einen Beobachtungszeitraum ("Customer Movement Reason"), Darstellung derzeit vom Anbieter nicht erfüllter Interessenspräferenzen der Benutzer, aus welchen Empfehlungen für neue Angebote (z.B. Programme, Inhalte, Dienste, etc.) abgeleitet werden können, etc.

Alternativ ist es auch günstig, wenn die Anbieterdaten unter Berücksichtigung der vom Benutzer eingegebenen Benutzerdaten als Auswahlkriterium semantisch ausgewertet werden, und dass dann ein Auswertungsergebnis für den Benutzer als personalisierte Auswahl von Programm- und Dienstangeboten verschiedener Anbieter aufbereitet und angezeigt wird, da der Benutzer auf diese Weise in übersichtlicher Form genau jene Programme und/oder Dienste angeboten bekommt, welche seinem aktuell angegebenen Interesse entsprechen.

Bei diesem bevorzugten Ausführungsbeispiel kann es weiters günstig sein, wenn bei der angezeigten, personalisierten Auswahl gewählt werden kann, ob ein entsprechendes Programm oder ein entsprechender Dienst zu einem betreffenden Zeitpunkt angeboten oder auf einem Aufnahmegeräte (z.B. einem so genannten Personal Video Recorder (PVR)) aufgezeichnet wird. Damit kann vom Benutzer auf einfache Weise sichergestellt werden, dass ein für ihn interessantes Programm oder ein für ihn interessanter Dienst nicht versäumt wird. Dies ist insbesondere wichtig, wenn das Programm bzw. der Dienst nur für eine beschränkte Zeitdauer angeboten wird.

Zweckmäßigerweise kann dabei auch dem Benutzer eine Erinnerungsnachricht zugestellt wird, zu welchem Zeitpunkt ein anhand der personalisierten Auswahl interessantes Programm- oder Dienstangebot zur Verfügung gestellt wird, damit wird der Benutzer z.B. auf den Beginn des für ihn interessanten Programm- oder Dienstangebotes aufmerksam gemacht. Der Benutzer kann dann beispielsweise entscheiden, ob er das Programm direkt betrachten bzw. den Dienst direkt nutzen, das Programm aufzeichnen oder das Angebot ablehnen möchte. Diese Auswahl kann z.B. als einfacher Dialog mit der Wiedergabevorrichtung (z.B. Set-Top-Box, TV-Gerät) gestaltet sein und z.B. mittels Fernbedienung oder direkt an der Wiedergabevorrichtung ausgeführt werden. Als Erinnerungsnachricht sind vorzugsweise eine entsprechende Benachrichtigung direkt über eine Anzeige der Wiedergabevorrichtung oder eine so genannte Short-Message (SMS) oder ein elektronische Nachricht (z.B. E-Mail) denkbar, wobei SMS bzw. E-Mail idealerweise an ein mobiles Endgerät (z.B. Laptop, Mobiltelefon, etc.) gesendet werden.

Die Lösung der Aufgabe erfolgt weiters durch ein System zur Durchführung des erfindungsgemäßen Verfahrens, wobei vorgesehen ist:
- eine Einrichtung für das Eingeben und Erfassen von Benutzerdaten als semantische Datenstruktur,
- eine Einrichtung für das Eingeben und Erfassen von Anbieterdaten in semantisch interpretierbarer Form,
- eine Einrichtung für das Verknüpfen der vorliegenden Benutzerdaten mit den vorliegenden Anbieterdaten mittels semantischer Methoden nach entsprechenden Auswahlkriterien, und
- eine Vorrichtung zum Ermitteln der Übereinstimmung zwischen vorliegenden Benutzerdaten mit den vorliegenden Anbieterdaten.
   Das erfindungsgemäße System bietet wie das erfindungsgemäße Verfahren den Vorteil, dass aus einer unübersichtlichen Informationsdatenmenge (z.B. Benutzer-, Anbieterdaten), welche typischerweise aus unterschiedlichen Quellen (d.h. Eingabe durch verschiedene Benutzer und/oder Anbieter) stammen, die physikalisch getrennt voneinander liegen können, mittels semantischer Methoden auf einfache und rasche Weise zielgerichtet Übereinstimmungen zwischen vorliegenden Benutzerdaten mit den vorliegenden Anbieterdaten zu ermitteln.
   Es ist außerdem günstig, wenn die Einrichtung für das Eingeben und Erfassen von Benutzerdaten als semantische Datenstruktur als digitale Multimedia-Wiedergabeeinrichtung ausgeführt ist, da auf diese Weise vom Benutzer ohne zusätzlichen Aufwand bereits vorhandene Infrastruktur (z.B. TV-Gerät, Set-Top-Box, Personal Computer, etc.) eingesetzt werden kann.
   Eine bevorzugte Ausgestaltung des erfindungsgemäßen Systems sieht auch vor, dass die Einrichtung für das Verknüpfen der vorliegenden Benutzerdaten mit den vorliegenden Anbieterdaten mittels semantischer Methoden nach entsprechenden Auswahlkriterien als zentrale Plattform ausgeführt ist, auf welcher die eingegebenen Benutzerdaten abgelegt werden und welche auch als Vorrichtung zum Ermitteln der Übereinstimmung zwischen vorliegenden Benutzerdaten mit den vorliegenden Anbieterdaten eingesetzt wird. Diese Plattform kann auf einfache Weise einerseits als so genannter "Informationsbroker" für Anbieter fungieren und andererseits zentral die Funktion eines so genannten personalisierten Programm- und Serviceführers zur Verfügung stellen, von welchem einem Benutzer entsprechend seiner Interessenspräferenzen Programm- und Dienstangebote verschiedener Anbieter angezeigt werden.
   Alternativ ist es aber auch denkbar, die Funktionalität des benutzerseitigen, personalisierten Programm- und Serviceführers dezentral zu realisieren. D.h., dass Funktionsteile bzw. die gesamte Funktionalität des personalisierten Programm- und Serviceführers in einer geeigneten Multimedia-Wiedergabevorrichtung (z.B. Set-Top-Box, TV-Gerät, Personal Computer, etc.) des jeweiligen Benutzers realisiert werden. Von diesem dezentral organisierte Programm- und Serviceführer wird dann beispielsweise über eine Kommunikationsverbindung entweder auf die Informationsquellen der Anbieter oder auf zentral zur Verfügung gestellte Anbieterdaten (z.B. mittels zentraler Plattform) zugegriffen.

### Kurzbeschreibung der Zeichnung

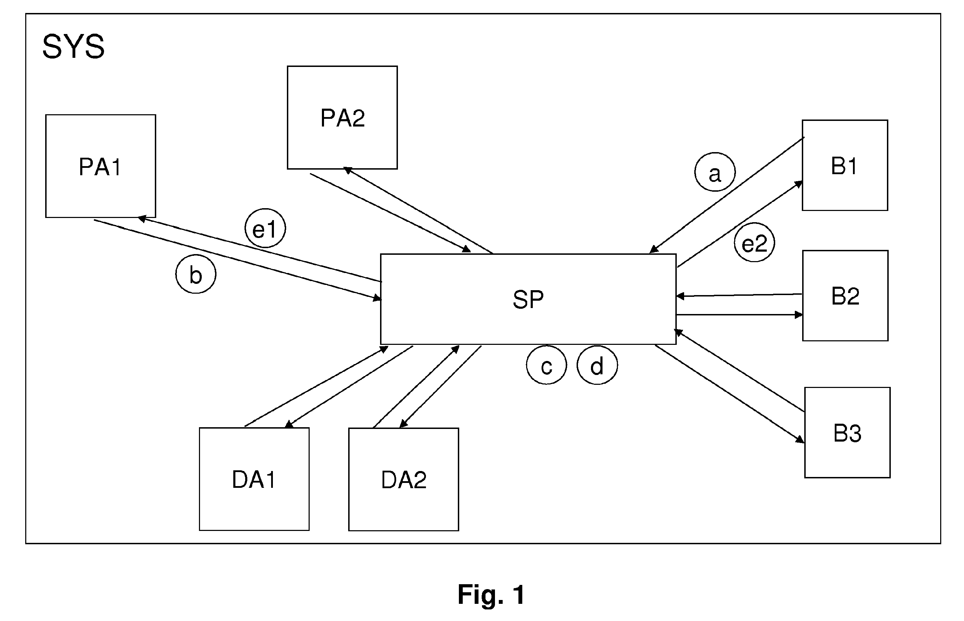

Die Erfindung wird nachfolgend in beispielhafter Weise anhand der beigefügten Figur erläutert. Es zeigt Figur 1 schematisch den Ablauf des erfindungsgemäßen Verfahrens sowie das erfindungsgemäße System in schematischer Weise.

### Ausführung der Erfindung

Figur 1 zeigt in schematischer Weise ein System SYS zur Bereitstellung einer Datenauswahl über eine Grad einer Übereinstimmung zwischen Programm- und Dienstangeboten verschiedener Anbieter und Interessenspräferenzen von Benutzern.

Dieses System SYS umfasst beispielhafte Einrichtungen B1, B2, B3 verschiedener Benutzer, über welche Benutzerdaten durch den jeweiligen Benutzer eingegeben und als semantische Datenstruktur erfasst werden. Im vorliegenden Ausführungsbeispiel soll als die Eingabevorrichtung B1, B2, B3, welche auch als Multimedia-Wiedergabevorrichtung fungiert, eine digitale Set-Top-Box sein, wobei alternativ z.B. auch der Einsatz eines DVB-fähige TV-Gerätes oder eines Personal Computers möglich wäre.

Das System SYS umfasst weiters beispielhafte Einrichtungen PA1, PA2, DA1, DA2 von Anbieter von Programmen und/oder Diensten. Über diese Einrichtungen PA1, PA2, DA1, DA2 werden Anbieterdaten eingegeben und in semantischer Form erfasst.

Zusätzliche ist eine Einrichtung SP vorgesehen, welche für das Verknüpfen der vorliegenden Benutzerdaten mit den vorliegenden Anbieterdaten mittels semantischer Methoden nach entsprechenden Auswahlkriterien eingesetzt wird, und im vorliegenden Ausführungsbeispiel auch als Vorrichtung zum Ermitteln einer Übereinstimmung zwischen vorliegenden Benutzerdaten mit den vorliegenden Anbieterdaten verwendet wird. Die Einrichtung SP ist damit eine Einrichtung für Datenverknüpfung und -auswertung.

Alternative ist es auch möglich, die Einrichtung für das Verknüpfen von Benutzer- mit Anbieterdaten und die Vorrichtung zum Ermitteln der Übereinstimmung getrennt auszuführen.

Im vorliegenden Ausführungsbeispiel ist die Einrichtung für Datenverknüpfung und -auswertung SP als zentrale Plattform ausgeführt, welche benutzerseitig als zentrale Funktion auch eine so genannten personalisierten Programm- und Serviceführers zur Verfügung stellen und anbieterseitig als so genannter zentraler Informationsbroker fungieren kann. Dabei ist zwischen der Einrichtung für Datenverknüpfung und - auswertung und den Eingabeeinrichtungen bzw. Multimedia-Wiedergabevorrichtungen B1, B2, B3 der Benutzer eine Kommunikationsverbindung, beispielsweise via Rückkanal des DVB-Standards oder das Internet vorgesehen. Zu den Anbietern ist ebenfalls eine Kommunikationsverbindung (z.B. via Internet) vorgesehen.

Alternativ ist es allerdings möglich, die Einrichtung für Datenverknüpfung und -auswertung SP dezentral auszugestalten. Dabei sind Kommunikationsverbindungen zwischen den Multimedia-Wiedergabevorrichtungen B1, B2, B3 zu aufbereiteten Informationsquellen der Programm- und Dienstanbieter beispielsweise über das Internet notwendig. In diesem Fall werden auch Funktionsteile oder eine gesamte Funktionalität des benutzerseitig angebotenen personalisierten Programm- und Serviceführers dezentral in den Multimedia-Wiedergabevorrichtungen B1, B2, B3 (z.B. Set-Top-Box, TV-Geräte, etc.) der Benutzer realisiert.

Figur 1 zeigt weiters den schematischen Ablauf des erfindungsgemäßen Verfahrens. Dabei werden in einem ersten Verfahrensschritt a durch einen Benutzer - z.B. den Benutzer der Multimedia-Wiedergabevorrichtung bzw. Set-Top-Box B1 - Benutzerdaten eingegeben und als semantische Datenstrukturen erfasst, wobei eine Eingabe der Benutzerdaten explizit (direkt durch den Benutzer) oder implizit (z.B. von der Multimedia-Wiedergabevorrichtung B1) erfolgen kann.

Diese Benutzerdaten umfassen vorzugsweise einen aktuellen Präsenzstatus und aktuelle Interessenspräferenzen des Benutzers. Der aktuelle Präsenzstatus gibt z.B. an, ob oder wenn der Benutzer anwesend - d.h. im System SYS aktiv ist und/oder z.B. von welchem Anbieter der Benutzer gerade Programm- und/oder Dienstangebote in Anspruch nimmt. Die aktuellen Interessenspräferenzen können beispielsweise Angaben umfassen wie Musik mit detaillierter Beschreibung (z.B. bestimmte Genres, Interpreten, etc.), Sport (z.B. Leichtathletik, Fußball, Reiten, Skispringen, etc.), Theater, Nachrichten und Politik, Naturwissenschaften, interaktive Spiele, interaktive Dienstleistungen, etc.

Die explizite Eingabe der Benutzerdaten über die Multimedia-Wiedergabevorrichtung B1 kann beispielsweise als Klartexteingabe (d.h. Beschreibung in den Worten des Benutzers), mittels Auswahl aus vorbereiteten Kategorien (z.B. Anwahl von Stichwörtern) und/oder durch geeigneten Knopfdruck z.B. auf einer Fernbedienung der Multimedia-Wiedergabevorrichtung B1 erfolgen. Bei einer impliziten Eingabe der Benutzerdaten wird die Eingabe z.B. durch die Multimedia-Wiedergabevorrichtung durchgeführt. Eine implizite Eingabe von Benutzerdaten wäre beispielsweise ein Programmwechsel des Benutzers, wodurch der Präsenzstatus des Benutzers geändert wird.

Die so eingegebenen Daten werden dann als semantische - d.h. als auch maschinell schlussfolgernde und auswertbare - Datenstruktur erfasst und z.B. auf der Einrichtung für Datenverknüpfung und -auswertung SP abgelegt. Dabei werden die Benutzerdaten - insbesondere bei Einsatz einer zentralen Einrichtung für Datenverknüpfung und -auswertung SP - unter Berücksichtigung des Datenschutzes anonymisiert bzw. eventuell enthaltene persönliche Benutzer-daten neutralisiert.

In einem zweiten Verfahrensschritt b werden durch Programm- und Dienstanbieter Anbieterdaten eingegeben und ebenfalls in semantisch interpretierbarer Form erfasst. Die Anbieterdaten können Anbieterprofile sowie Programm- und/oder Dienstangebote (z.B. Beschreibung des Programms, Dienstname, Zeit der Verfügbarkeit, Genre, Preis, programm-/dienstspezifische Eigenschaften, etc.) umfassen. Zusätzlich können diese Anbieterdaten auch Programminhalte aus einem Archiv eines Programmanbieters oder nur als Programmangebot verfügbar gemachte Teile daraus aufweisen. Die Anbieterdaten werden ebenfalls für die Einrichtung für Datenverknüpfung und - auswertung SP verfügbar gemacht.

In einem dritten Verfahrensschritt c werden von der Einrichtung für Datenverknüpfung und -auswertung SP die vorliegenden Benutzerdaten - z.B. des Benutzers mit der Multimedia-Vorrichtung B1 oder auch von vielen, verschiedenen Benutzern - mit den vorliegenden Anbieterdaten mittels semantischer Methoden (z.B. logische, maschinell Auswertung, etc.) und nach entsprechend Auswahlkriterien verknüpft.

In einem vierten Verfahrensschritt d wird dann von der Einrichtung für Datenverknüpfung und -auswertung SP die Übereinstimmung zwischen den vorliegenden Benutzerdaten mit den vorliegenden Anbieterdaten ermittelt.

Die entsprechende Übereinstimmung kann dann je nach den angegebenen Auswahlkriterien anbieterseitig bzw. benutzerseitig in einem fünften Verfahrensschritt e1 oder in einem sechsten Verfahrensschritt e2 angezeigt werden.

Im fünften Verfahrensschritt e1 wird beispielsweise von einem Anbieter mit der Eingabevorrichtung PA1 explizit eine Verknüpfung der Benutzerdaten mit Anbieterdaten und eine zugehörige Auswertung angefordert. Alternativ ist auch ein Anfordern in regelmäßigen Abständen denkbar.

Als Auswahlkriterien können vom Anbieter dabei anbieterspezifische Anforderungen angegeben werden wie beispielsweise ein Summendarstellung sämtlicher Benutzerdaten ohne Abgleich mit den Anbieterdaten ("Total View"), eine Darstellung sämtlicher Benutzerdaten mit Abgleich mit den Anbieterdaten ("Global View"), eine Darstellung sämtlicher Benutzerdaten mit Abgleich mit den Anbieterdaten, wobei die Benutzer gerade ein Angebot des abfragenden Anbieters nutzen ("Own Customer View"), Darstellung von Veränderungen der aktiven Benutzer über einen Beobachtungszeitraum ("Customer Movement Reason"), Darstellung derzeit vom Anbieter nicht erfüllter Interessenspräferenzen der Benutzer, aus welchen Empfehlungen für neue Angebote (z.B. Programme, Inhalte, Dienste, etc.) abgeleitet werden können, etc.

Die entsprechende Auswertung wird dem Anbieter dann in geeigneter Form (z.B. Übersicht, tabellarische Darstellung, graphische Darstellung) angezeigt.

Im sechsten Verfahrensschritt e2 wird beispielsweise vom Benutzer der Multimedia-Wiedergabevorrichtung B1 eine Verknüpfung der Benutzerdaten mit Anbieterdaten und eine zugehörige Auswertung angefordert.

Als entsprechendes Auswahlkriterium werden benutzerseitig die Benutzerdaten, insbesondere die Interessenspräferenzen des Benutzers, herangezogen. Das bedeutet, dass die vorliegenden Anbieterdaten von der Einrichtung für Datenverknüpfung und - auswertung SP unter Berücksichtigung der vom Benutzer eingegebenen Benutzerdaten semantisch ausgewertet werden. Dem Benutzer wird dann das Ergebnis dieser Auswertung als personalisierte Auswahl von Programm- und Dienstangeboten verschiedener Anbieter auf seiner Multimedia-Wiedergabevorrichtung B1 angezeigt und stellt eine Art personalisierte Programm-/Dienstempfehlung für den Benutzer dar. Diese angezeigte Ergebnis umfasst insbesondere jene Programme und Dienste, die den Interessenspräferenzen des Benutzer, aber jene Programm- und Dienstanbieter, welche seinen Empfangsmöglichkeiten - z.B. bei einer Set-Top-Box als digitales Signal, bei TV-Geräten terrestrisch, via Satellit oder Kabel oder beim Personal Computer als so genanntes IPTV - entsprechen. Das bedeutet, dem Benutzer wird innerhalb einer geeigneten Reaktionszeit mitgeteilt, wann und bei welchem Anbieter ein Programm/Dienst entsprechend seiner Interessenspräferenzen verfügbar und abrufbar bzw. empfangbar ist.

Es kann dann vorgesehen sein, dass der Benutzer beispielsweise wählen kann, ob das Programm bzw. der Dienst von ihm genutzt oder auf einem Aufnahmegeräte (z.B. Videorecorder, PVR, etc.) aufgezeichnet wird.

In einer weiteren Ausprägung kann dem Benutzer auch eine Erinnerungsnachricht zugestellt werden, zu welchem Zeitpunkt für ihn interessante Programm- oder Dienstangebote zur Verfügung gestellt werden. Die Benachrichtigung kann dabei beispielsweise in entsprechender Form über die Multimedia-Wiedergabevorrichtung B1 (z.B. ein so genanntes PopUp-Fenster am Display des TV-Gerätes oder des Personal Computers) erfolgen. Es ist aber auch möglich, dass die Benachrichtigung als Short Message (SMS) oder als so genannte E-Mail an beispielsweise ein mobiles Endgerät der Benutzers (z.B. Laptop, Mobiltelefon) gesendet wird.

Zu betreffenden Zeitpunkt kann dann beispielsweise dem Benutzer der Beginn des entsprechenden Programms angezeigt werden. Dabei kann dem Benutzer eine Auswahl angeboten werden und mittels einfachen Dialogs, wie z.B. über eine Fernbedienung, an einem mobilen TV-Geräte oder via DVB-H, eine Option gewählt werden. Als Auswahloptionen sind dabei denkbar, Programm direkt auf jeweiligem Endgerät ansehen, Programm z.B. mittel PVR aufzeichnen oder angebotenes Programm ablehnen/nicht ansehen.

## Patentansprüche

1. Verfahren zur Bereitstellung einer Datenauswahl über einen Grad einer Übereinstimmung zwischen Programm- und Dienstangeboten verschiedener Anbieter mit Interessenspräferenzen von Benutzern mit den Schritten:
a) Eingeben von Benutzerdaten, vorzugsweise aktuelle Interessenspräferenzen und aktueller Präsenzstatus, durch einen Benutzer und Erfassen dieser Benutzerdaten als semantische Datenstruktur (a),
b) Eingeben von Anbieterdaten, insbesondere Anbieterprofile sowie Programm- und Dienstangeboten, durch Programm- und Dienstanbieter und Erfassen dieser Anbieterdaten in semantisch interpretierbarer Form (b),
c) Verknüpfen der vorliegenden Benutzerdaten mit den vorliegenden Anbieterdaten mittels semantischer Methoden nach entsprechenden Auswahlkriterien (c), und
d) Ermitteln der Übereinstimmung zwischen vorliegenden Benutzerdaten mit den vorliegenden Anbieterdaten (d).

2. Verfahren nach Anspruch 1, **dadurch gekennzeichnet, dass** vom Benutzer für ein Eingeben der Benutzerdaten eine digitale Multimedia-Wiedergabevorrichtung (B1, B2, B3), wie beispielsweise eine Set-Top-Box oder ein DVB-fähiges TV-Gerät oder ein Personal Computer, eingesetzt wird.

3. Verfahren nach Anspruch 2, **dadurch gekennzeichnet, dass** die Multimedia-Wiedergabevorrichtung (B1, B2, B3) Kommunikationsverbindungen zu aufbereiteten Informationsangeboten der Programm- und Dienstanbieter, welche die Anbieterdaten umfassen, aufweist.

4. Verfahren nach einem der Ansprüche 1 bis 2, **dadurch gekennzeichnet, dass** für das Verknüpfen der vorliegenden Benutzerdaten mit den vorliegenden Anbieterdaten mittels semantischer Methoden nach entsprechenden Auswahlkriterien eine zentrale Plattform (SP) eingesetzt wird.

5. Verfahren nach Anspruch 4, **dadurch gekennzeichnet, dass** die digitale Multimedia-Wiedergabevorrichtung (B1, B2, B3) eine Kommunikationsverbindung zur zentralen Plattform (SP) aufweist, auf welcher die eingegebenen Benutzerdaten abgelegt werden.

6. Verfahren nach einem der Ansprüche 3 oder 5, **dadurch gekennzeichnet, dass** als Kommunikationsverbindung das Internet eingesetzt wird.

7. Verfahren nach einem der vorangegangenen Ansprüche, **dadurch gekennzeichnet, dass** die Benutzerdaten unter Berücksichtigung der Anbieterdaten und/oder von anbieterspezifischen Anforderungen als Auswahlkriterien semantisch ausgewertet werden, und dass dann ein Auswertungsergebnis dem entsprechenden Programm- und Dienstanbieter mitgeteilt wird (e1).

8. Verfahren nach einem der Ansprüche 1 bis 6, **dadurch gekennzeichnet, dass** die Anbieterdaten unter Berücksichtigung der vom Benutzer eingegebenen Benutzerdaten als Auswahlkriterium semantisch ausgewertet werden, und dass dann ein Auswertungsergebnis für den Benutzer als personalisierte Auswahl von Programm- und Dienstangeboten verschiedener Anbieter aufbereitet und angezeigt wird (e2).

9. Verfahren nach Anspruch 8, **dadurch gekennzeichnet, dass** bei der angezeigten, personalisierten Auswahl gewählt werden kann, ob ein entsprechendes Programm oder ein entsprechender Dienst zu einem betreffenden Zeitpunkt angeboten oder auf einem Aufnahmegeräte aufgezeichnet wird.

10. Verfahren nach einem der Ansprüche 8 bis 9, **dadurch gekennzeichnet, dass** dem Benutzer eine Erinnerungsnachricht zugestellt wird, zu welchem Zeitpunkt ein anhand der personalisierten Auswahl interessantes Programm- oder Dienstangebot zur Verfügung gestellt wird.

11. System (SYS) zur Durchführung des Verfahrens nach einem der Ansprüche 1 bis 10, **dadurch gekennzeichnet, dass** vorgesehen ist:
- eine Einrichtung (B1, B2, B3) für das Eingeben und Erfassen von Benutzerdaten als semantische Datenstruktur,
- eine Einrichtung (PA1, PA2, DA1, DA2) für das Eingeben und Erfassen von Anbieterdaten in semantisch interpretierbarer Form,
- eine Einrichtung (SP) für das Verknüpfen der vorliegenden Benutzerdaten mit den vorliegenden Anbieterdaten mittels semantischer Methoden nach entsprechenden Auswahlkriterien, und
- eine Vorrichtung (SP) zum Ermitteln der Übereinstimmung zwischen vorliegenden Benutzerdaten mit den vorliegenden Anbieterdaten.

12. System nach Anspruch 11, **dadurch gekennzeichnet, dass** die Einrichtung (SP) für das Eingeben und Erfassen von Benutzerdaten als semantische Datenstruktur als digitale Multimedia-Wiedergabeeinrichtung ausgeführt ist.

13. System nach Anspruch 11, **dadurch gekennzeichnet, dass** die Einrichtung (SP) für das Verknüpfen der vorliegenden Benutzerdaten mit den vorliegenden Anbieterdaten mittels semantischer Methoden nach entsprechenden Auswahlkriterien als zentrale Plattform ausgeführt ist, auf welcher die eingegebenen Benutzerdaten abgelegt werden und welche auch als Vorrichtung (SP) zum Ermitteln der Übereinstimmung zwischen vorliegenden Benutzerdaten mit den vorliegenden Anbieterdaten eingesetzt wird.
